**Europäisches Patentamt**

**European Patent Office**

**Office européen des brevets**

(11) Veröffentlichungsnummer: **0 371 351**
**A2**

## (12) EUROPÄISCHE PATENTANMELDUNG

(21) Anmeldenummer: **89121269.8**

(22) Anmeldetag: **17.11.89**

(51) Int. Cl.⁵: **B23B 29/034, B23B 29/04**

(30) Priorität: **01.12.88 DE 8814953 U**

(43) Veröffentlichungstag der Anmeldung:
**06.06.90 Patentblatt 90/23**

(84) Benannte Vertragsstaaten:
**AT BE CH DE ES FR GB IT LI NL SE**

(71) Anmelder: **Fietz, Manfred**
**Müllersbaum 40**
**D-5093 Burscheid(DE)**

(72) Erfinder: **Fietz, Manfred**
**Müllersbaum 40**
**D-5093 Burscheid(DE)**

(74) Vertreter: **Paul, Dieter-Alfred, Dipl.-Ing.**
**Fichtestrasse 18**
**D-4040 Neuss 1(DE)**

(54) Werkzeughalter.

(57) Ein Werkzeughalter (1; 40) für eine Werkzeugmaschine weist wenigstens zwei Hauptbauteile (2, 8;
41, 42, 43), nämlich eine Werkzeugaufnahme (8;
43), in der das Werkzeug arretierbar ist, und einen
von der Werkzeugaufnahme (8; 43) getrennten
Grundkörper (2; 41) auf, der eine Anschlußeinrichtung (3; 44) für die Befestigung an der Werkzeugmaschine aufweist, wobei die Werkzeugaufnahme (4;
43) in einer Schiebeführung (7, 9; 46, 47, 48, 49)
translatorisch geführt ist, welche Führungsflächen
zur spielfreien Führung quer zur Verschieberichtung
hat, und wobei wenigstens eine Spanneinrichtung
zum Verspannen der Hauptbauteile (2, 8; 41, 42, 43)
über Führungsflächen vorgesehen ist. Um das Auswechseln der Werkzeuge zu vereinfachen, weist die
Spanneinrichtung (e, n) jeweils einen in dem einen
Hauptbauteil (2; 41, 42) drehbar gelagerten Exzenter
(18; 53, 65) und an dem anderen Hauptbauteil (8, 14;
42, 49, 43, 61) eine Spannfläche (17; 52, 64) auf,
wobei jeweils der Exzenter (18; 53, 65) von außen
zugänglich und sein Exzenterabschnitt (22; 57, 66)
gegen die Spannfläche (17; 52, 64) zur Verspannung
der beiden Hauptbauteile (2, 8; 41, 42, 43) miteinander bewegbar ist und wobei der Exenterabschnitt
(22; 57, 66) und die Spannfläche (17; 52, 64) derart
geformt sind, daß sie in Spannstellung selbsthemmend aneinanderliegen.

FIG.1

Xerox Copy Centre

# Werkzeughalter

Die Erfindung berifft einen Werkzeughalter, insbesondere Drehmeißelhalter, für den Anbau an eine Werkzeugmaschine, mit wenigstens zwei Hauptbauteilen, nämlich einer Werkzeugaufnahme, in der das Werkzeug arretierbar ist, und einem von der Werkzeugaufnahme getrennten Grundkörper, der eine Anschlußeinrichtung für die Befestigung an der Werkzeugmaschine aufweist, wobei die Werkzeugaufnahme in einer Schiebeführung translatorisch geführt ist, welche Führungsflächen zur spielfreien Führung quer zur Verschieberichtung hat, und wobei wenigstens eine Spanneinrichtung zum Verspannen der Hauptbauteile über die Führungsflächen vorgesehen ist.

Ein solcher Werkzeughalter ist bekannt. Er besteht aus zwei Hauptbauteilen, nämlich einer Werkzeugaufnahme und einem Grundkörper. Die Werkzeugaufnahme dient der Befestigung eines Werkzeuges, beispielsweise eines Drehmeißels, und ist translatorisch in einer Schiebeführung auf dem Grundkörper geführt. Als Schiebeführung dienen die aneinanderliegenden Flächen der beiden Hauptbauteile, die als komplimentäre Flachverzahnungen ausgebildet sind und ineinandergreifen. Zur Fixierung der Werkzeugaufnahme dient eine Spanneinrichtung, die einen separaten Spannkörper aufweist, der die Schiebeführung durchsetzt und mit seinem Spannkopf eine formschlüssige Verbindung zu der Werkzeugaufnahme hat. Der Spannkörper ragt an der zur Schiebeführung gegenüberliegenden Seite des Grundkörpers heraus und kann dort mittels einer Spannmutter angezogen werden. Hierdurch wird die Werkzeugaufnahme gegen die Schiebeführung und damit gegen den Grundkörper spielfrei verspannt.

Der vorbekannte Werkzeughalter ist nur für Werkzeugmaschinen mit Seitenschlitten verwendbar, da der Spannkörper mit der Spannmutter an der Unterseite des Grundkörpers vorsteht. Ein weiterer Nachteil besteht darin, daß in automatischen Werkzeugmaschinen häufig zu wenig Platz ist, um einen Schraubenschlüssel an die Spannmutter anzusetzen. Es kommt zu einem Schrägangriff des Schraubenschlüssels mit der Folge, daß die Spannschraube schnell verschleißt und damit die Werkzeugaufnahme nicht mehr ausgewechselt werden kann. Schließlich dauert das Lösen der Verspannung und das anschließende Festziehen - insbesondere auch bei beengten Verhältnissen - relativ lange. Entsprechende Zeit nimmt ein Werkzeugwechsel in Anspruch.

Der Erfindung liegt die Aufgabe zugrunde, einen Werkzeughalter der eingangs genannten Art so auszubilden, daß er universeller einsetzbar ist und daß die Werkzeugwechselzeit wesentlich kürzer gestaltet werden kann.

Diese Aufgabe wird erfindungsgemäß dadurch gelöst, daß die Spanneinrichtung(en) jeweils einen in dem einen Hauptbauteil drehbar gelagerten Exzenter und an dem anderen Hauptbauteil eine Spannfläche aufweist bzw. aufweisen, wobei jeweils der Exzenter von außen zugänglich und sein Exzenterabschnitt gegen die Spannfläche zur Verspannung der beiden Hauptbauteile miteinander bewegbar ist und wobei Exzenterabschnitt und Spannfläche derart geformt sind, daß sie in Spannstellung selbsthemmend aneinanderliegen.

Erfindungsgemäß ist hier jeweils eine Spanneinrichtung zur Verbindung der Hauptbauteile vorgesehen, deren charakteristische Bauteile einerseits ein Exzenter und andererseits ein dem Exzenter zugeordnete Spannfläche sind. Durch Verdrehen des Exzenters kommt die Spannfläche mit dessen Exzenterabschnitt in Wirkverbindung, und zwar dergestalt, daß die an dem anderen Hauptbauteil vorgesehene oder damit gekoppelte Spannfläche in Spannrichtung beaufschlagt wird mit der Folge, daß das mit der Spannfläche versehene oder damit verbundene Hauptbauteil gegen die Schiebeführung des benachbarten Hauptbauteils verspannt wird. Dabei hat sich überraschenderweise gezeigt, daß die Verspannung bei selbsthemmender Ausbildung von Exzenterabschnitt und Spannfläche alle in einer Werkzeugmaschine auftretenden Erschütterungen und Vibrationen aushält, es also nicht zum Lösen der Verbindung der Hauptbauteile kommt.

Das Verspannen der Hauptbauteile mittels Exzenter geht außerordentlich schnell vor sich. Die Werkzeugwechselzeiten konnten mit diesem Werkzeughalter gegenüber den vorbekannten Lösungen erheblich verringert werden. Von besonderem Vorteil ist, daß der Exzenter seitlich aus dem zugehörigen Hauptbauteil und damit parallel zur Schiebeführung herausgeführt ist, so daß die Unterseite des Grundkörpers frei ist für die Ausbildung der Anschlußeinrichtung zwecks Befestigung an der Werkzeugmaschine. Der Einsatzbereich dieses Werkzeughalters ist deshalb nicht eingeschränkt. Außerdem hat die seitliche Herausführung des Exzenters den Vorteil guter Zugänglichkeit auch bei beengten Raumverhältnissen.

In Ausbildung der Erfindung ist vorgesehen, daß zwischen Grundkörper und Werkzeugaufnahme wenigstens ein drittes Hauptbauteil in Form eines Zwischenkörpers angeordnet ist, wobei die Werkzeugaufnahme auf dem Zwischenkörper in einer ersten Führung und der Zwischenkörper auf dem Grundkörper in einer zweiten Schiebeführung geführt sind und die Schieberichtungen beider Schiebeführungen einen Winkel einschließen, und daß eine erste Spanneinrichtung zum Andrücken der Werkzeugaufnahme auf den Zwischenkörper und eine zweite Spanneinrichtung zum Andrücken des Zwischenkörpers auf dem Grundkörper vorgesehen sind. Diese Ausführung ist besonders vielseitig einsetzbar, weil die Werkzeugaufnahme gegenüber dem Grundkörper in zwei Richtungen bewegt werden kann, und zwar zum einen durch Verschiebung gegenüber dem Zwischenkörper und zum anderen durch Verschiebung des Zwischenkörpers gegenüber dem Grundkörper. In beiden Fällen sorgen die erfindungsgemäß ausgebildeten Spanneinrichtungen für ein schnelles Lösen und Festlegen der jeweiligen Hauptbaukörper zueinander. Dabei sollten die Exzenter beider Spanneinrichtungen vorzugsweise parallel zueinander gelagert und von der gleichen Seite her zugänglich sein, insbesondere wenn die Schieberichtungen im rechten Winkel zueinander stehen.

Zweckmäßig ist es, daß die Spannflächen an einem in das jeweils andere Hauptteil hineinragenden Spannkörper angebracht ist bzw. sind, in den der Exzenterabschnitt einfaßt. Der Spannkörper kann dabei mit dem zugehörigen Hauptbauteil ein einziges Teil bilden, sich also bei Verschiebung der Werkzeugaufnahme mit dieser mitbewegen. Als vorteilhaft hat sich jedoch erwiesen, den bzw. die Spannkörper jeweils als ein von dem zugehörigen Hauptbauteil getrenntes Bauteil auszubilden, dessen Spannkopf in Spannrichtung eine formschlüssige Ausbildung für den Eingriff in das zugehörige Hauptbauteil hat, wobei dieses Hauptbauteil in nicht verspanntem Zustand gegenüber dem Spannkörper in Richtung der Schiebeführung bewegbar ist. Erfindungsgemäß ist also der jeweilige Spannkörper ein gesondertes Bauteil, das mit dem zugehörigen Hauptbauteil in Spannrichtung gesehen formschlüssig gekuppelt ist, wobei dieses Hauptbauteil in nicht gespanntem Zustand gegenüber dem Spannkörper verschoben werden kann. Dabei ist der Spannkopf des jeweiligen Spannkörpers vorzugsweise T-förmig ausgebildet und sitzt in einer daran angepaßte Nut in dem zugehörigen Hauptbauteil. Der Spannkörper selbst kann dann derart ausgeführt sein, daß er nur in der oder gegen die Spannrichtung bewegbar ist, ansonsten unbeweglich geführt ist. Für das Auswechseln des Werkzeuges muß die mit diesem bestückte Werkzeugaufnahme nur über den zugehörigen Spannkopf geschoben werden. Nach Festlegung der vorgegebenen Stellung kann dann der Spannkörper mit Hilfe des Exzenters in Spannrichtung bewegt und hierdurch die Werkzeugaufnahme gegen die Schiebeführung verspannt werden. Dabei ist es zweckmäßig, daß der Spannkopf in dem zugehörigen Hauptbauteil gegen die Spannrichtung Spiel hat oder frei beweglich ist, um diesem Hauptbauteil beim Überschieben über den Spannkopf genügend Lose zu geben und hierdurch das Aufschieben des Hauptbauteils zu erleichtern.

In zweckmäßiger Weiterbildung der Erfindung ist vorgesehen, daß die Spannfläche(n) jeweils von einer Ausnehmung gebildet ist bzw. sind, in die der Exzenterabschnitt einfaßt. Diese Ausnehmung(en) ist bzw. sind vorzugsweise als Durchgangsbohrung ausgebildet, da dies die Möglichkeit eröffnet, den Exzenter beidseits der jeweiligen Durchgangsbohrung zu lagern. Dabei sollte der Exzenterabschnitt in der Ausnehmung entgegen der Spannrichtung Spiel haben.

Nach einem weiteren Merkmal der Erfindung ist vorgeschlagen, daß die Werkzeugaufnahme bzw. der Spannkörper gegen die Spannrichtung federbeaufschlagt sind. Dies erleichtert ein Lösen der Werkzeugaufnahme, da sie nach Lösen der Spanneinrichtung von der Schiebeführung bzw. den Spannflächen abgehoben wird.

In Ausbildung der Erfindung ist vorgesehen, daß die geneigten Führungsflächen als Verzahnung ausgebildet sind, die vorzugsweise in einer ebenen Fläche liegt. Die Verzahnung bildet eine Vielzahl von geneigten Führungsflächen, so daß das eine Hauptbauteil gegenüber dem anderen quer zur Verschieberichtung spielfrei geführt ist. Statt einer Verzahnung können auch eine Prismenführung oder ähnliche Führungen vorgesehen werden, soweit sie durch schräge Führungsflächen eine spielfreie Festlegung des jeweiligen Hauptbauteils quer zur Verschieberichtung garantieren.

In der Zeichnung ist die Erfindung an Hand eines Ausführungsbeispiels näher veranschaulicht. Es zeigen:

Figur (1) den Werkzeughalter in einem Vertikalschnitt in der Ebene B-B gemäß Figur (2);

Figur (2) eine Seitenansicht des Werkzeughalters gemäß Figur (1), gegenüber dieser Figur um 90° verdreht;

Figur (3) den Werkzeughalter gemäß den Figuren (1) und (2) in einer Schnittdarstellung in der Ebene A-A gemäß Figur (1);

Figur (4) eine Seitenansicht eines Werkzeughalters mit Zwischenkörper;

Figur (5) eine Schnittdarstellung durch den Werkzeughalter gemäß Figur (4) in der Ebene C-C und

Figur (6) eine Draufsicht auf den Werkzeughalter gemäß den Figuren (4) und (5).

Der in den Figuren dargestellte Werkzeughalter (1) weist einen Grundkörper (2) auf, der einen nach unten angeformten Anschlußzapfen (3) hat. Der Anschlußzapfen (3) besitzt plane Ausrichtflächen (4, 5), über die der Grundkörper (2) in einer passenden Aufnahme in der Werkzeugmaschine verspannt werden kann, und zwar immer in der gleichen Stellung. Zur Definierung der jeweils gleichen Höhenlage dient ein Absatz (6), der bei dem Einsetzen des Werkzeughalters (1) in die Aufnahme an der Werkzeugmaschine auf einem Anschlag zur Anlage kommt.

Der eigentliche Grundkörper (2) ist etwa quaderförmig geformt. Seine Oberseite ist mit einer Verzahnung (7) versehen, die sich über die gesamte Länge des Grundkörpers (2) erstreckt, wie in Figur (1) angedeutet ist. Die Verzahnung (7) bildet eine Schiebeführung für eine Werkzeugaufnahme (8), die auf die Oberseite des Grundkörpers (2) aufgesetzt ist und an ihrer Unterseite eine entsprechende Verzahnung (9) aufweist. Beide Verzahnungen (7, 9) greifen ineinander, wobei jeder Zahn zwei schräge Flächen hat, die mit gegenüberliegenden schrägen Flächen korrespondieren. Auf diese Weise ist die Werkzeugaufnahme (8) in der Zeichnungsebene der Figur (1), also in den Richtungen des Doppelpfeils D, horizontal verschiebbar, wobei die Führung quer dazu spielfrei ist. Anstatt der Verzahnungen (7, 9) können auch andere Führungsflächen vorgesehen sein. Sie sollten jedoch auf Grund zueinander geneigter Führungsflächen quer zur Verschieberichtung spielfrei sein.

Die Werkzeugaufnahme (8) hat im oberen Bereich eine nach oben offenen Ausnehmung (10). Diese Ausnehmung (10) dient der Aufnahme eines Werkzeuges, beispielsweise eines Drehmeißels. Das Werkzeug kann über Schrauben arretiert werden, die in die Durchgangsbohrungen (11, 12) einsetzbar sind und das Werkzeug gegen die gegenüberliegende Wandung der Ausnehmung (10) verspannen.

Die Werkazugaufnahme (8) weist eine nach unten hin offene, in Verschieberichtung D durchgehende und im Querschnitt T-förmige Spannut (13) auf. In diese Spannut (13) faßt ein Spannkörper (14) mit seinem gleichfalls T-förmigen Spannkopf (15) ein. Der Spannkörper (14) ist im Horizontalschnitt rechteckig und sitzt in einer passenden Ausnehmung (16) im Grundkörper (2), so daß er nur vertikal beweglich ist. In nicht verspanntem Zustand kann die Werkzeugaufnahme (8) gegenüber dem Spannkörper (14) bzw. dem Spannkopf (15) in Verschieberichtung D bewegt werden.

Der Spannkörper (14) weist in dem Bereich, der sich innerhalb des Grundkörpers (2) befindet, eine Durchgangsbohrung (17) auf. Durch sie geht ein Exzenterbolzen (18), der in einer Lagerbohrung (19) im Grundkörper (2) drehbar gelagert ist. Er weist einen Bolzenkopf (20) auf, in dessen Außenfläche ein Innensechskant (21) eingelassen ist. Der in der Durchgangsbohrung (17) im Spannkörper (14) sitzende Teil des Exzenterbolzens (18) ist als Exzenterabschnitt (22) ausgebildet. Auch er hat - wie der übrige Exzenterbolzen (18) -kreisförmigen Querschnitt. Seine Längsachse ist jedoch ein wenig gegenüber der Längsachse der übrigen Teile des Exzenterbolzens (18) versetzt. Beim Drehen des Exzenterbolzens (14) bewegt sich also die Längsachse des Exzenterabschnittes (22) um die Längsachse der übrigen Teile des Exzenterbolzens (18) und damit der Lagerbohrung (19).

An der Unterseite des Spannkörpers (14) liegt eine als Druckfeder ausgebildete Schraubenfeder (24) an, die in einem nach unten offenen Kanal (25) im Anschlußzapfen (3) sitzt. Am unteren Ende stützt sich die Schraubenfeder (24) an einer Verschlußschraube (26) ab, die bündig in den Kanal (25) eingeschraubt ist. Auf diese Weise wird der Spannkörper (14) mit dem unteren Teil der Durchgangsbohrung (17) immer gegen den Exzenterabschnitt (22) gedrückt.

Am in der Darstellung gemäß Figur (1) linken Ende des Grundkörpers (2) ist eine Anschlagplatte (27) befestigt. In der Werkzeugaufnahme (8) sind zwei Justierschrauben (29, 30) angeordnet, die jeweils in einem Gewinde innerhalb der Werkzeugaufnahme (8) sitzen. Ihr Außenmantel ist ebenfalls mit einem Gewinde versehen. Zur Anschlagplatte (27) hin gehen die Justierschrauben (29, 30) jeweils in Anschlagstücke (33) geringeren Querschnitts und ohne Gewinde über.

Der vorbeschriebene Werkzeughalter (1) wird wie folgt benutzt.

Das hier nicht näher dargestellte Werkzeug wird - entgegen der Darstellung - schon vor der Verbindung mit dem Grundkörper (2) in die Werkzeugaufnahme (8) eingesetzt. Gleichzeitig werden die Justierschrauben (29, 30) derart eingestellt, daß deren nach außen vorstehenden Teile einem gewünschten Maß entsprechen. Dann wird die Werkzeugaufnahme (8) mit dem darin fixierten Werkzeug auf die Oberseite des Grundkörpers (2) derart aufgesetzt, daß beide Verzahnungen (7, 9) ineinandergreifen, und zwar zunächst - in der Darstellung gemäß Figur (1) - rechts von dem Spannkopf (15). Dann wird die Werkzeugaufnahme (8) mit dem darin fixierten Werkzeug auf die Oberseite des Grundkörpers (2) derart aufgesetzt, daß beide Verzahnungen (7, 9) ineinandergreifen, und zwar zunächst - in der Darstellung gemäß Figur (1) - rechts von dem Spannkopf (15). Dann wird die Werkzeugaufnahme (8) nach links verschoben, so daß sie über den Spannkopf (15) fährt und dieser in die Spannut (13) einfährt. Der Exzenterbolzen (18) ist dabei so verdreht, daß sich die Längsachse des Exzenterabschnittes (22) oberhalb der Längsachse der Durchgangsbohrung (19) befindet. Da gleichzeitig die Schraubenfeder (24) immer bestrebt ist, den Spannkörper (14) in untenseitiger Anlage an dem Exzenterabschnitt (22) zu halten, ragt der Spannkopf (15) etwas weiter heraus als in der Spannstellung. Dies erleichtert das Überschieben der Werkzeugaufnahme (8) über den Spannkopf (15), zumal die Spannut (13) etwas höher als notwendig ausgebildet ist. Das Überschieben der Werkzeugaufnahme (8) über den Spannkopf (15) geschieht so weit, bis die Justierschrauben (29, 3Ø) mit ihren herausragenden Enden gegen die Anschlagplatte (27) fahren und dort zur Anlage kommen. Die Werkzeugaufnahme (8) nimmt dann die gewünschte Stellung zum Grundkörper (2) ein.

Die Fixierung der Werkzeugaufnahme (8) in dieser Stellung wird durch Verdrehen des Exzenterbolzens (18) bewirkt. Durch diese Verdrehung wandert die Längsachse des Exzenterabschnittes (22) unter die der Durchgangsbohrung (19), was zur Folge hat, daß der Spannkörper (14) gegen die Wirkung der Schraubenfeder (24) nach unten bewegt wird. Der Spannkopf (15) kommt dann in Anlage an den Hinterschneidungsflächen der Spannut (13) und nimmt die Werkzeugaufnahme (8) mit, bis deren Verzahnung (9) mit Vorspannung gegen die Verzahnung (7) des Grundkörpers (2) gepreßt wird. Der Exzenterbolzen (18) wird so weit verdreht, bis der Sitz des Exzenterabschnittes (22) in der Durchgangsbohrung (17) selbsthemmend geworden ist. Damit ist die Werkzeugaufnahme (8) in ihrer Lage festgelegt.

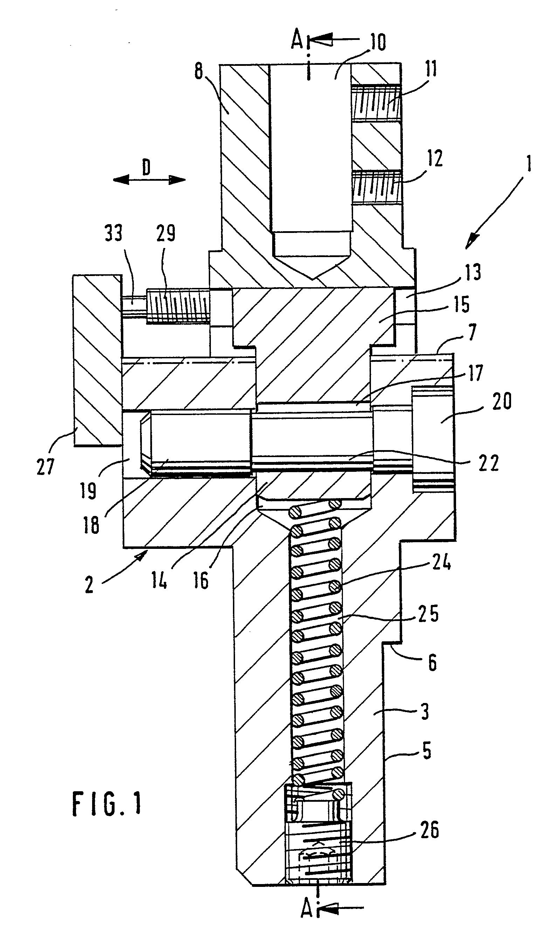

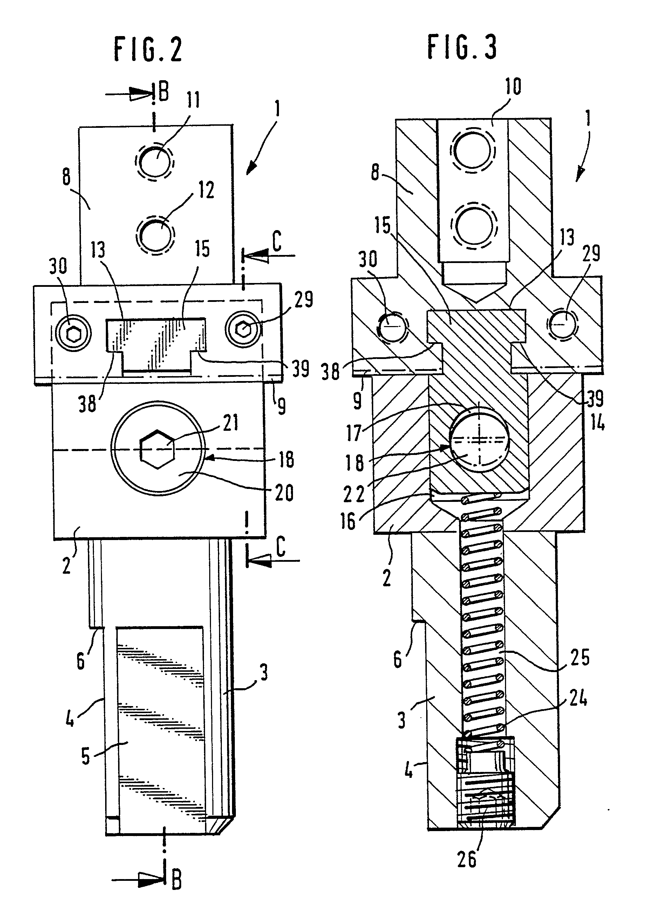

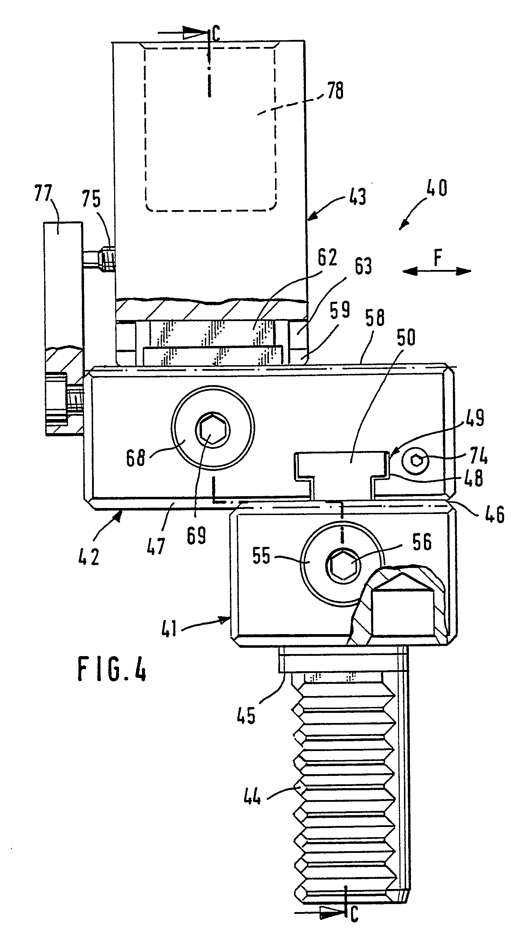

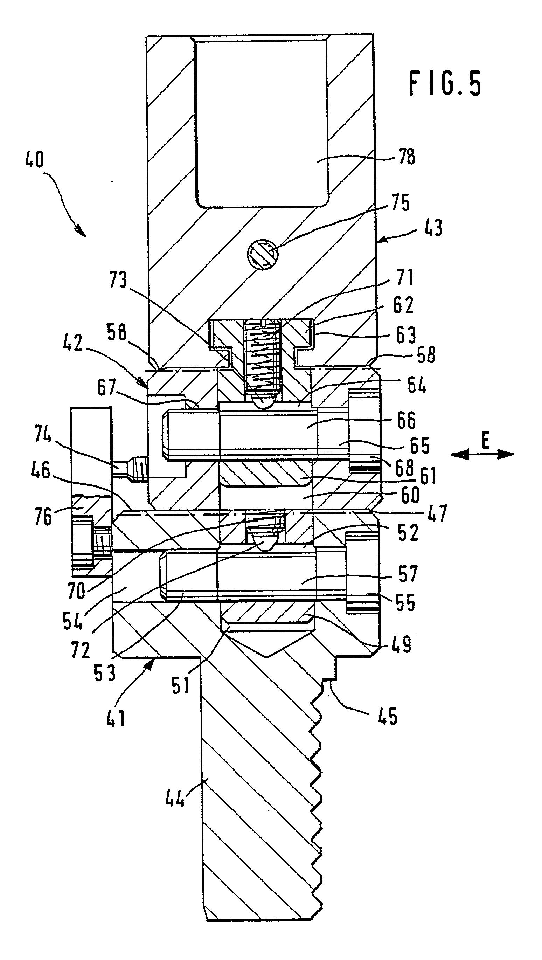

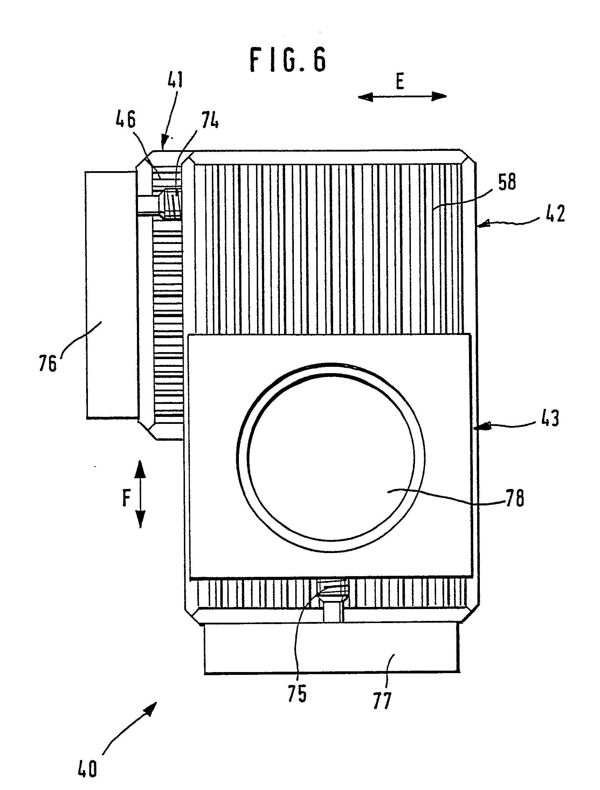

Das Lösen der Werkzeugaufnahme (8) geht umgekehrt vonstatten. Der Exzenterbolzen (18) wird in entgegengesetzter Richtung verdreht, so daß seine Längsachse wieder in eine Stellung oberhalb der Längsachse der Durchgangsbohrung (19) wandert. Auf Grund der Schraubenfeder (24) bleibt der Spannkörper (14) in Anlage an der Unterseite des Exzenterabschnittes (22) und wird somit nach oben bewegt. Der Spannkopf (15) löst sich von den Hinterschneidungsflächen und gibt die Werkzeugaufnahme (8) frei, so daß sie nach rechts (Figur 1) herausgeschoben werden kann. Es kann dann eine andere Werkzeugaufnahme (8), bestückt mit einem neuen Werkzeug, eingesetzt werden.

Der in den Figuren (4) bis (6) dargestellte Werkzeughalter (4Ø) besteht im wesentlichen aus einem Grundkörper (41), einem darauf angeordneten Zwischenkörper (42) und einer auf diesem aufgesetzten Werkzeugaufnahme (43). Er unterscheidet sich von der Ausführungsform gemäß den Figuren (1) bis (3) im wesentlichen durch die Zwischenschaltung des Zwischenkörpers (42) zwischen Grundkörper (41) und Werkzeugaufnahme (43).

Der Grundkörper (41) hat untenseitig einen verzahnten Anschlußzapfen (44), über die er in einer passenden Aufnahme in der Werkzeugmaschine verspannt werden kann. Zur Definierung der jeweils gleichen Höhelage dient ein Absatz (45), der beim Einsetzen des Werkzeughalters (4Ø) in die Werkzeugmaschine auf einem entsprechenden Anschlag zur Anlage kommt. Der Grundkörper (41) hat in etwa Quaderform, wobei seine Oberseite mit einer Verzahnung (46) versehen ist, die sich über seine gesamte Oberfläche erstreckt.

Auf die Verzahnung (46) ist der Zwischenkörper (42) aufgesetzt. An seiner Unterseite hat er eine passende Verzahnung (47). Auf diese Weise ist der Zwischenkörper (42) in den Richtungen des Doppelpfeils E horizontal gegenüber dem Grundkörper (41) verschiebbar.

Der Zwischenkörper (42) weist eine nach unter hin offene, in Verschieberichtung E durchgehende und im Querschnitt T-förmige Spannut (48) auf, in die ein Spannkörper (49) mit einem an die Spannut (48) angepaßten, gleichfalls T-förmigen Spannkopf (5Ø) hinein ragtr. Der Spannkörper (49) sitzt in einer passenden Ausnehmung (51) im Grundkörper (41). In nicht verspanntem Zustand kann der Zwischenkörper (42) gegenüber dem Spannkörper (49) bzw. dem Spannkopf (5Ø) in Verschieberichtung E bewegt werden.

Der Spannkörper (49) weist in dem Bereich, der sich innerhalb des Grundkörpers (41) befindet, eine Durchgangsbohrung (52) auf. Durch sie geht ein Exzenterbolzen (53), der in einer Lagerbohrung (54) im Grundkörper (41) drehbar gelagert ist. Er weist einen Bolzenkopf (55) auf, in dessen Außenfläche ein Innensechskant (56) eingelassen ist. Der in der Durchgangsbohrung (52) des Spannkörpers (49) sitzende Teil des Exzenterbolzens (53) ist als Exzenterabschnitt (57) ausgebildet. Auch er hat - wie der übrige Exzenterbolzen (53) -kreisförmigen Querschnitt, jedoch mit einer versetzten Längsachse. Beim Drehen des Exzenterbolzens (53) bewegt sich also die Längsachse des Exzenterabschnittes (57) um die Längsachse der übrigen Teile des Exzenterbolzens (53) und damit der Lagerbohrung (54).

Eine entsprechende Spanneinrichtung ist zwischen der Werkzeugaufnahme (53) und dem Zwischenkörper (42) vorgesehen. Der Zwischenkörper (42) weist an seiner Oberseite eine Verzahnung (58) auf, die mit einer Verzahnung (59) an der Unterseite der Werkzeugaufnahme (43) korrespondiert und mit dieser in Eingriff steht. Beide Verzahnungen (58, 59) verlaufen rechtwinklig zu den Verzahnungen (46, 47) zwischen Grundkörper (41) und Zwischenkörper (42). Die Ebenen der Verzahnungen (46, 47) bzw. (58, 59) sind parallel. Die Verzahnungen (58, 59) lassen eine Verschiebung der Werkzeugaufnahme (43) gegenüber dem Zwischenkörper (42) in den Richtungen des Doppelpfeils F zu.

Zur Verspannung der Werkzeugaufnahme (43) mit dem Zwischenkörper (42) ist die gleiche Spanneinrichtung vorgesehen, d. h. im Zwischenkörper (42), und zwar in einer Ausnehmung (6Ø), sitzt ein Spannkörper (61), dessen Spannkopf (62) in eine T-förmige Spannut (63) in der Werkzeugaufnahme (43) einfaßt. Die Spannut (63) ist in der Verschieberichtung F durchgehend ausgebildet.

Der Spannkörper (61) weist eine Durchgangsbohrung (64) auf, durch die ein Exzenterbolzen (65) mit seinem Exzenterabschnitt (66) faßt. Der Exzenterbolzen (65) ist in einer Lagerbohrung (67) beidseits des Exzenterabschnittes (66) gelagert und verläuft parallel zu dem Exzenterbolzen (43) im Grundkörper (41). Sein Bolzenkopf (68 weist ebenfalls einen Innensechskant (69) auf. Beide Bolzenköpfe (55, 68) sind zur gleichen Seite von Zwischenkörper (42) und Grundkörper (41) gerichtet.

In beide Spannköpfe (50, 62) sind in vertikaler Richtung Federspanneinrichtungen (70, 71) festsitzend eingeschraubt. In diesen ist jeweils ein an der Unterseite vorstehender und am zugehörigen Exzenterabschnitt (57, 66) anliegender Halbkugelkopf axial verschieblich gelagert und durch eine Druckfeder beaufschlagt. Dies hat zur Folge, daß die Spannkörper (49, 61) jeweils nach oben gedrückt werden, so daß die jeweils unteren Abschnitte ihrer Durchgangsbohrungen (52, 64) an die zugehörigen Exzenterabschnitte (57, 66) anliegen.

Sowohl der Zwischenkörper (42) als auch die Werkzeugaufnahme (43) weisen je eine Justierschraube (74, 75) auf, die in einem Gewinde drehbar sitzen und sich parallel zur jeweiligen Verschieberichtung erstrecken. Am Grundkörper (41) ist eine Anschlagplatte (76) hochstehend angeschraubt, gegen die das vorstehende Ende der im Zwischenkörper (42) gelagerten Justierschraube (74) anliegt. Auch der Zwischenkörper (42) weist eine hochstehende Anschlagplatte (77) auf, die der Anlage der in der Werkzeugaufnahme (43) gelagerten Justierschraube (75) dient.

Die Werkzeugaufnahme (43) hat im oberen Bereich eine nach oben offene Ausnehmung (78) für die Aufnahme eines Werkzeuges. Die Arretierung erfolgt über hier nicht näher dargestellte Klemmschrauben.

Die Funktion des Werkzeughalters (40) ist ähnlich dem in den Figuren (1) bis (3) dargestellten Ausführungsbeispiel, nur daß die Verschiebemöglichkeiten auf Grund der rechtwinklig zueinander stehenden Schieberichtungen entsprechend größer sind. Dabei kann die Werkzeugaufnahme (43) zusammen mit dem Zwischenkörper (42) oder auch allein abgenommen werden. Mit Hilfe der Justierschrauben (74, 75) kann ein ganzes System von auswechselbaren Werkzeugaufnahmen (43) mit entsprechend eingesetzten Werkzeugen voreingestellt werden, so daß das Auswechseln zügig geht. Dies wird noch unterstützt durch die gute Zugänglichkeit der Exzenterbolzen (53, 65) von einer Seite her, wobei das Spannen und Entspannen durch eine kurze Verdrehung dieser Exzenterbolzen (53, 65) geschieht. Im übrigen kann hinsichtlich des Gebrauchs dieses Werkzeughalters (40) auf die Beschreibung zu dem Werkzeughalter (1) in analoger Weise Bezug genommen werden.

## Ansprüche

1. Werkzeughalter (1; 40), insbesondere Drehmeißelhalter, für den Anbau an eine Werkzeugmaschine, mit wenigstens zwei Hauptbauteilen (2, 8; 41, 42, 43), nämlich einer Werkzeugaufnahme (8; 43), in der das Werkzeug arretierbar ist, und einem von der Werkzeugaufnahme (8; 43) getrennten Grundkörper (2; 41), der eine Anschlußeinrichtung 3; 44) für die Befestigung an der Werkzeugmaschine aufweist, wobei die Werkzeugaufnahme (8; 43) in einer Schiebeführung (7, 9; 46, 47, 58, 59) translatorisch geführt ist, welche Führungsflächen zur spielfreien Führung quer zur Verschieberichtung hat, und wobei wenigstens jeweils eine Spanneinrichtung zum Verspannen der Hauptbauteile (2, 8; 41, 42, 43) über Führungsflächen vorgesehen ist, dadurch gekennzeichnet, daß die Spanneinrichtung(en) jeweils einen in dem einen Hauptbauteil (2; 41, 42) drehbar gelagerten Exzenter (18; 53, 65) und an dem anderen Hauptbauteil (8, 14; 42, 49, 43, 61) eine Spannfläche (17; 52, 64) aufweist bzw. aufweisen, wobei jeweils der Exzenter (18; 53, 65) von außen zugänglich und sein Exzenterabschnitt (22; 57, 66) gegen die Spannfläche (17; 52, 64) zur Verspannung der beiden Hauptbauteile (2, 8; 41, 42, 43) miteinander bewegbar ist und wobei Exzenterabschnitt (22; 57, 66) und Spannfläche (17: 52, 64) derart geformt sind, daß sie in Spannstellung selbsthemmend aneinanderliegen.

2. Werkzeughalter nach Anspruch 1, dadurch gekennzeichnet, daß zwischen Grundkörper (41) und Werkzeugaufnahme (43) wenigstens ein drittes Hauptbauteil in Form eines Zwischenkörpers (42) angeordnet ist, wobei die Werkzeugaufnahme (43) auf dem Zwischenkörper (42) in einer ersten Schiebeführung (58, 59) und der Zwischenkörper (42) auf dem Grundkörper (41) in einer zweiten Schiebeführung (46, 47) geführt sind und die Schieberichtungen (E, F) beider Schiebeführungen (46, 47, 58, 59) einen Winkel einschließen, und daß eine erste Spanneinrichtung zum Andrücken der Werkzeugaufnahme (43) auf den Zwischenkörper (42) und eine zweite Spanneinrichtung zum Andrücken des Zwischenkörpers (42) auf dem Grundkörper (41) vorgesehen sind.

3. Werkzeughalter nach Anspruch 2, dadurch gekennzeichnet, daß die Exzenter (57, 66) beider Spanneinrichtungen parallel zueinander gelagert und von der gleichen Seite her zugänglich sind.

4. Werkzeughalter nach einem der Ansprüche 1 bis 3, dadurch gekennzeichnet, daß die Spannfläche(n) (17; 52, 64) an einem in das jeweils andere Hauptbauteil (2; 41, 42) hineinragenden Spannkörper (14; 49, 61) angeordnet ist bzw. sind, in den der jeweilige Exzenterabschnitt (22; 57, 66) einfaßt.

5. Werkzeughalter nach Anspruch 4, dadurch gekennzeichnet, daß der bzw. die Spannkörper (14; 49, 61) jeweils als ein von dem zugehörigen Hauptbauteil (8; 42, 43) getrenntes Bauteil ausgebildet ist, dessen Spannkopf (15, 50, 62) in Spannrichtung eine formschlüssige Ausbildung für den Eingriff in das zugehörige Hauptbauteil (8; 42, 43) hat, wobei dieses Hauptbauteil (8; 42, 43) in nicht verspanntem Zustand gegenüber dem Spannkörper (14; 49, 61) in Richtung der Schiebeführung (7, 9; 46, 47,; 58, 59) bewegbar ist.

6. Werkzeughalter nach Anspruch 5, dadurch gekennzeichnet, daß der Spannkopf (15; 50, 62) des Spannkörpers bzw. der Spannkörper (14; 49, 61) jeweils T-förmig ausgebildet und in einer daran angepaßten Nut (13; 48, 63) in dem zugehörigen Hauptbauteil (8; 42, 43) sitzt.

7. Werkzeughalter nach Anspruch 5 oder 6, dadurch gekennzeichnet, daß jeder Spannkörper (14; 49, 61) derart geführt ist, daß er nur in der oder gegen die Spannrichtung (D; E, F) bewegbar ist.

8. Werkzeughalter nach einem der Ansprüche 5 bis 7, dadurch gekennzeichnet, daß jeder Spannkopf (15; 50, 62) in dem zugehörigen Hauptbauteil (8; 42, 43) gegen die Spannrichtung Spiel hat oder frei beweglich ist bzw. sind.

9. Werkzeughalter nach einem der Ansprüche 1 bis 8, dadurch gekennzeichnet, daß die Spannfläche(n) jeweils von einer Ausnehmung (17; 52, 64) gebildet ist bzw sind, in die der Exzenterabschnitt (22; 57, 66) einfaßt.

10. Werkzeughalter nach Anspruch 9, dadurch gekennzeichnet, daß die Ausnehmung(en) als Durchgängsbohrung(en) (17; 52, 64) ausgebildet ist bzw. sind.

11. Werkzeughalter nach Anspruch 9 oder 10, dadurch gekennzeichnet, daß jeweils der Exzenterabschnitt (22; 57, 66) in der zugehörigen Ausnehmung (17; 52, 64) entgegen der Spannrichtung Spiel hat.

12. Werkzeughalter nach einem der Ansprüche 1 bis 11, dadurch gekennzeichnet, daß der bzw. die Exzenter (18; 53, 65) beidseits des Exzenterabschnittes (22; 57, 66) gelagert ist bzw. sind.

13. Werkzeughalter nach einem der Ansprüche 1 bis 12, dadurch gekennzeichnet, daß jeweils die Spannfläche(n) (17; 52, 64) gegen die Spannrichtung federbeaufschlagt sind.

14. Werkzeughalter nach einem der Anspüche 1 bis 13, dadurch gekennzeichnet, daß die geneigten Führungsflächen als Verzahnung (7, 9; 46, 47, 58, 59) ausgebildet sind.

15. Werkzeughalter nach einem der Ansprüche 1 bis 14, dadurch gekennzeichnet, daß im Bewegungsbereich der Werkzeugaufnahme (8; 43) - gegebenenfalls auch des Zwischenkörpers (42) - zumindest ein Anschlag (27; 76, 77) vorgesehen ist.

16. Werkzeughalter nach Anspruch 15, dadurch gekennzeichnet, daß eine Verstelleinrichtung (29; 74, 75) zur Veränderung der Stellung der Werkzeugaufnahme (8; 43) bzw. Zwischenkörpers (42) bei Anlage am Anschlag (27; 76, 77) vorgesehen ist.

FIG.1

# FIG.2

# FIG.3

FIG.4

FIG.5

FIG. 6